# EUROPÄISCHE PATENTSCHRIFT

(11) **EP 0 469 362 B1**
(45) Veröffentlichungstag und Bekanntmachung des Hinweises auf die Patenterteilung: **15.05.1996**
(21) Anmeldenummer: 91111636.6
(22) Anmeldetag: 12.07.1991
(51) Int. Cl.: B67D 5/02

(54) **Einrichtung zum Sammeln einer Flüssigkeit**
Device for collecting liquids
Dispositif pour la récupération de liquides

(30) Priorität: 21.07.1990 DE 9010861 U; 08.03.1991 DE 9102774 U
(43) Veröffentlichungstag der Anmeldung: 05.02.1992
(73) Patentinhaber: ITT Automotive Europe GmbH, D-60488 Frankfurt (DE); Bodo Stier Hydrotechnik GmbH, 78727 Oberndorf/Neckar (DE)
(72) Erfinder: Curati, Roberto, W-6070 Langen (DE); Ott, Karola, W-6053 Obertshausen-Hausen (DE); Koenig, Bernd, D - 65329 Hochheim (DE); Ries, Arnold, D - 78727 Oberndorf/Neckar (DE)

(56) Entgegenhaltungen:
- EP-A- 0 294 719
- DE-U- 8 429 005
- US-A- 4 905 963

## Beschreibung

Die Erfindung betrifft eine Einrichtung zum Sammeln einer Flüssigkeit und soll es ermöglichen, diese Flüssigkeit möglichst sortenrein zu sammeln und anschließend zu entsorgen oder zu recyceln. Aus dem deutschen Gebrauchsmuster 84 29 005.6 ist eine derartige Einrichtung bekannt, die einen Entnahmebehälter zur vorübergehenden Aufnahme der Flüssigkeit und zum Transport zu einem und Übergabe an diesen Sammelbehälter aufweist. Zur Übergabe der Flüssigkeit werden die beiden Behälter vorübergehend mittels einer Kupplungsvorrichtung miteinander verbunden, wobei jeweils ein kuppelbares Teil in jedem Behälter angeordnet ist, welches ihn in nicht gekuppeltem Zustand verschließt. Jeder Behälter kann nur beim beabsichtigten, gekuppelten Zusammenwirken der Teile mit der vorbestimmten Flüssigkeit gefüllt bzw. entleert werden.

Diese bekannte Einrichtung ist recht umständlich zu handhaben, da die Auslaßöffnung des Entnahmebehälters oben angeordnet ist und er also zum Entleeren umgedreht werden muß. Außerdem weist sie einen Spezialverschluß auf und ist daher verhältnismäßig teuer in der Herstellung.

Die Einrichtung gemäß der Erfindung ist demgegenüber einfach in der Handhabung, da die mit einem Schlauch verbundene Einlaßöffnung des Entnahmebehälters oben an diesem und die Auslaßöffnung in seinem Boden angeordnet ist. Die Füße am Entnahmebehälter erlauben es, ihn überall abzustellen und schützen das Schnellkupplungsteil vor Verunreinigung. Zum Entleeren des Entnahmebehälters in den Sammelbehälter wird dieser einfach auf letzteren bzw. ein Verbindungselement gestellt, der Schnellverschluß wird gekuppelt und die gesammelte Flüssigkeit läuft in den Sammelbehälter, aus welchem durch eine Entlüftungsvorrichtung die verdrängte Luft entweichen kann.

Vorteilhafte Ausgestaltungen lassen sich den Unteransprüchen entnehmen und werden im folgenden anhand der in den Zeichnungen dargestellten Ausführungsbeispiele erläutert.

Es zeigt
- Fig. 1: perspektivisch einen Entnahmebehälter und den oberen Teil des Sammelbehälters und
- Fig. 2: beide Behälter in entkuppeltem Zustand von der Seite,
- Fig. 3: perspektivisch vier andere Entnahmebehälter, die über ein Verbindungselement an den Sammelbehälter angeschlossen sind,
- Fig. 4: einen der anderen Entnahmebehälter von der Seite und
- Fig. 5: einen einzelnen anderen Entnahmebehälter in mit dem Sammelbehälter gekuppeltem Zustand.

In allen Figuren sind gleiche Teile mit demselben Bezugszeichen versehen.

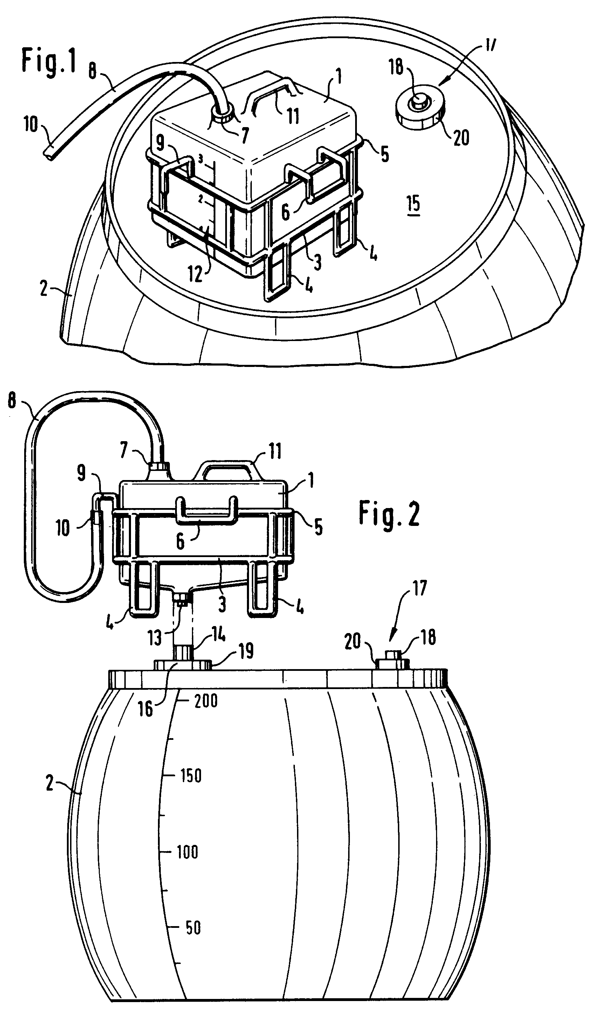

Zunächst wird auf die Fig. 1 und 2 Bezug genommen.

Man erkennt den kleineren Entnahmebehälter 1, der ein Fassungsvermögen von etwa 3 l hat und den größeren als Faß ausgebildeten Sammelbehälter 2, der in unterschiedlichen Größen je nach Bedarf lieferbar ist. Mögliche Größen sind etwa 50, 100 und 200 l Fassungsvermögen.

Am Entnahmebehälter 1 ist ein Ständer 3 befestigt, der den Entnahmebehälter 1 trägt und an dem Füße 4 angebracht sind, auf denen der Entnahmebehälter 1 steht. Der Ständer 3 ist im Ausführungsbeispiel nach den Fig. 1 und 2 als Korb 5 ausgebildet, der aus Metall oder einem anderen Material mit hinreichender Stabilität bestehen kann. Außerdem ist am Ständer 3 eine Vorrichtung 6 zum Einhängen des Entnahmebehälters 1 an einer Wand oder an einem Kraftfahrzeug im Motorraumbereich angebracht. Mit Hilfe dieser Vorrichtung 6 kann der Entnahmebehälter 1, wenn er befüllt wird bzw. unbenutzt ist, aufgehängt werden. Außerdem weist der Entnahmebehälter 1 oben eine Einfüllöffnung 7 auf, an der ein Schlauch 8 befestigt ist. Im Bereich der Einfüllöffnung 7 befindet sich auch ein Entlüftungsmechanismus, der nicht näher dargestellt ist und das Entweichen bzw. Einlassen von Luft beim Befüllen bzw. Entleeren des Entnahmebehälters 1 erlaubt. Der Korb 5 weist eine Halterung 9 auf, die das freie Schlauchende 10 im unbenutzten Zustand aufnimmt. In einfacher Weise wird diese Halterung 9 von einem zylindrischen Abschnitt gebildet, auf den das freie Schlauchende 10 aufgeschoben werden kann.

Oben am Entnahmebehälter 1 ist ein Griff 11 vorgesehen, der wahlweise als Teil des Korbs 5 ausgebildet sein kann oder einteilig mit dem Behälter 1 selbst ausgeformt ist. Der Griff 11 erlaubt einen einfachen Transport des Entnahmebehälters 1. Weiterhin ist an der Seite des Entnahmebehälters 1 eine Skala 12 angebracht, mit deren Hilfe sich die aufgenommene Flüssigkeitsmenge erkennen läßt, so daß man beispielsweise sicher ist, ein Bremsflüssigkeitssystem eines PKW's vollständig entleert zu haben.

Unten im Boden des Entnahmebehälters 1 ist die Auslaßöffnung angeordnet, die von einem Teil 13 einer Schnellkupplung gebildet wird. In dieses Auslaßschnellkupplungsteil 13 ist ein Ventilmechanismus integriert, der sicherstellt, daß nur in gekuppeltem Zustand ein Flüssigkeitsdurchtritt möglich ist. Die Abmessungen der Füße 4 und des Schnellkupplungsteils 13 sind so aufeinander abgestimmt, daß einerseits beim Abstellen des Behälters 1 auf dem Boden das Schnellkupplungsteil 13 nicht mit diesem und Schmutz in Kontakt kommen kann und daß andererseits der Entnahmebehälter 1, wenn das Auslaßschnellkupplungsteil 13 des Entnahmebehälters mit dem Einlaßschnellkupplungsteil 14 des Sammelbehälters 2 verbunden ist, auf dem Deckel 15 des Sammelbehälters 2 steht, wodurch die Schnellkupplung 13,14 keine Last aufzunehmen braucht.

Als Sammelbehälter 2 dient ein Faß, das zwei Spundlöcher 16, 17 aufweist. Bei diesem Ausführungsbeispiel ist der Einlaßschnellkupplungsteil 14 unmittelbar im größeren Spundloch 16 angeordnet. Das Einlaßschnellkupplungsteil 14 beinhaltet einen Einlaßventilmechanismus und stellt so sicher, daß nur bei Anschluß des passenden, richtigen Entnahmebehälters 1 mit der passenden Auslaßschnellkupplung 13 ein Flüssigkeitseinlaß erfolgt. Im kleinen Spundloch 17 ist eine automatisch funktionierende Entlüftungvorrichtung 18 zu erkennen, die nur bei Befüllen des Sammelbehälters 2 Luft austreten läßt und das Eindringen von Verunreinigungen sonst verhindert. Dies ist vor allem beim Sammeln von hygroskopischer Flüssigkeit wichtig, da solche bei Dauerbelüftung viel Wasser aufnehmen könnte.

Sowohl das Schnellkupplungsteil 14 als auch die Entlüftungsvorrichtung 18 sind lösbar beispielsweise durch Einschrauben in den Spundlöchern 16 und 17 befestigt. Diese Maßnahme macht es möglich, beim Abliefern der gesammelten Flüssigkeit an ein Entsorgungsunternehmen die Entlüftungsvorrichtung 18 und das Einlaßschnellkupplungsteil 14 aus dem vollen Sammelbehälter 2 zu entfernen und in einen leeren einzusetzen. Die Spundlöcher 16 und 17 werden für den Abtransport mit gewöhnlichen preiswerten Schraubdeckeln verschlossen. Um Mißbrauch und versehentliches Öffnen der Spundlöcher 16 und 17 zu verhindern, sieht eine Weiterbildung der Erfindung vor, daß die Befestigungen mit Siegelkappen 19 und 20 gesichert sind. In einfacher Weise sind die Schnellkupplungsteile 13,14 in einer Normgröße ausgeführt und weisen eine Abmessung auf, die üblicherweise in Werkstätten nicht verwendet wird. So kann ausgeschlossen werden, daß irrtümlich etwa Altöl des Motors mit Altbremsflüssigkeit vermischt wird.

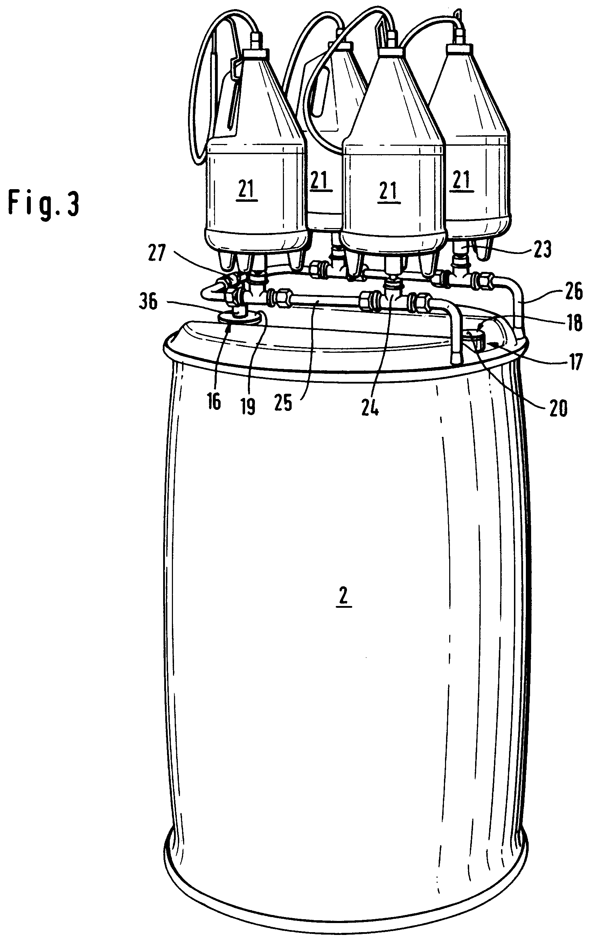

In den Fig. 3 - 5 sind andere Entnahmebehälter 21, die ein Fassungsvermögen von je etwa vier Litern haben, mit dem als Faß ausgebildeten Sammelbehälter 2 kombiniert.

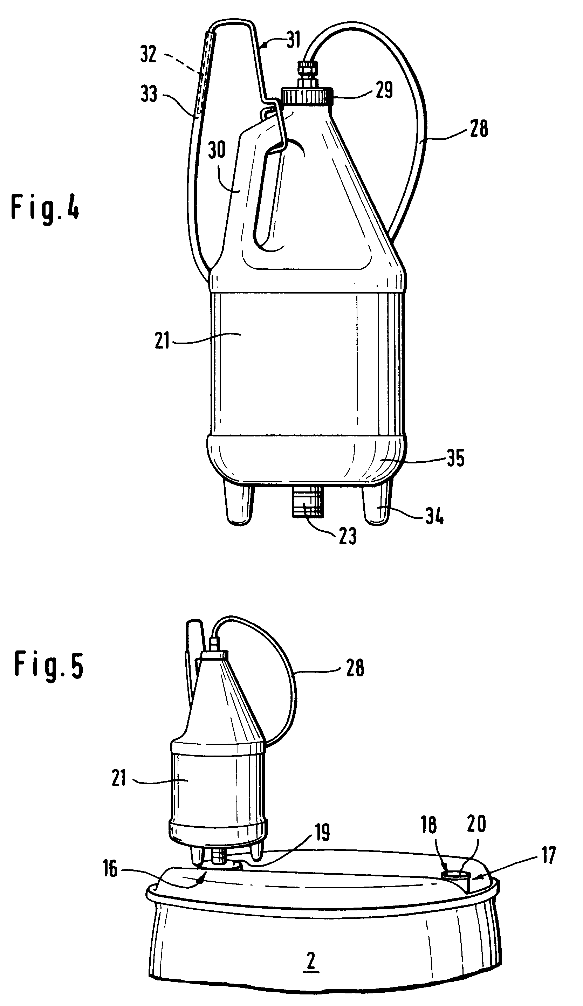

Jeder der Entnahmebehälter 21 (siehe Fig. 4) ist unten mit einem Auslaßschnellkupplungsteil 23 ausgerüstet, der in Fig. 3 mit dem Einlaßschnellkupplungsteil 24 des Verbindungselements 25 gekuppelt ist. Das gezeigte Verbindungselement 25 weist vier derartige Einlaßschnellkupplungsteile 24 auf, die nach oben zeigen, ist im wesentlichen U-förmig und außerdem mit Füßen 26 und einem Auslaßschnellkupplungsteil 27 ausgerüstet. Alle Schnellkupplungen 23,24,27 beinhalten Ventile, die normalerweise geschlossen und nur bei paarweiser Kupplung eines Einlaß- mit einem Auslaßschnellverschluß geöffnet sind. Die Füße 26 des Verbindungselements 25 sind entweder massiv ausgeführt, so daß keine Flüssigkeit in sie hineinlaufen kann, oder so lang, daß ein Gefälle zum Auslaßschnellkupplungsteil 27 hin entsteht und daher keine Flüssigkeit in die sonst eine Sackgasse bildenden Füße hineingelangt. Die Füße 26 stützen sich auf dem Sammelbehälter 2 ab. Selbstverständlich sind auch andere Ausführungen des Verbindungselements 25 denkbar, die zwei, drei, fünf, sechs oder mehr Einlaßkupplungsteile 24 aufweisen und entsprechend viele Entnahmebehälter 21 mit dem Sammelbehälter 2 verbinden. Der Sammelbehälter ist ebenso wie oben im Zusammenhang mit den Fig. 1 und 2 erläutert ausgebildet.

Fig. 4 zeigt einen einzelnen Entnahmebehälter 21, an dessen oberer Einfüllöffnung ein Schlauch 28 befestigt ist. Die Befestigungsverschraubung 29 ist versiegelt bzw. entsprechend gesichert, so daß sie nicht entfernt werden kann. Im oberen Drittel ist der Entnahmebehälter 21 teilweise als seitlicher Griff 30 ausgebildet, an dem er gut festzuhalten bzw. zu transportieren ist.

Oben am Griff 30 ist eine als Drahtbügel ausgeführte Vorrichtung 31 befestigt, die einerseits zum Aufhängen des Entnahmebehälters 21 an einer Wand oder einem Kraftfahrzeugteil und andererseits als Halterung 32 für das im unbenutzten Zustand freie Schlauchende 33 dient. Das Schlauchende 33 wird dabei einfach auf den im Querschnitt kreisförmigen Drahtbügel aufgesteckt.

Unten ist am Behälter 21, der ebenso wie der Sammelbehälter 2 aus halbdurchsichtigem Material hergestellt ist, um den Flüssigkeitsstand im Behälter 21,2 jederzeit von außen ablesesn zu können, ein Ständer 3 mit Füßen 34 angebracht. Im zweiten Ausführungsbeispiel (Fig. 3-5) ist dieser Ständer 3 eine aus Kunststoff gefertigte Schale 35 mit angegossenen Füßen 34. Der Ständer 3 ist mit Hilfe des Auslaßschnellkupplungsteils 23 am Behälter 21 befestigt. Im gezeigten Beispiel sind drei Füße 34 vorgesehen, die einen kippsicheren Stand gewährleisten. Auch die Abmessungen der Füße 34 und des Schnellkupplungsteils 23 sind so aufeinander abgestimmt, daß beim Abstellen des Behälters 21 auf den Boden das Schnellkupplungsteil 23 nicht mit diesem und Schmutz in Kontakt kommen kann.

In Fig. 5 ist ein einzelner Entnahmebehälter 21 gezeigt, dessen Auslaßschnellkupplungsteil 23 direkt mit dem Einlaßschnellkupplungsteil 36 des Sammelbehälters 2 gekuppelt ist. Dies ist möglich, jedoch ist die in Fig. 3 dargestellte Variante mit vier Entnahmebehältern 21 für die allermeisten Anwender (Werkstätten) zweckmäßiger. Alle Schnellkupplungsteile 23,24,36 und 27 haben jedoch die gleichen Abmessungen.

Durch die Erfindung ist es in besonders einfacher Weise möglich, den gesetzlichen Bestimmungen zum Sammeln und Wiederverwenden von sortenreinen Altflüssigkeiten nachzukommen. Die Werkstattabläufe werden nicht verändert.

## Patentansprüche

1. Einrichtung zum Sammeln einer Flüssigkeit, bestehend aus mindestens zwei über eine Schnellkupplung miteinander verbindbaren Behältern (1,21;2), von denen mindestens einer als Entnahmebehälter (1,21) dient, der mit einer oben angeordneten Einfüllöffnung, an der ein Schlauch (8,28) befestigt ist, mit einer in seinem Boden angeordneten Auslaßöffnung, die das Auslaßteil der Schnellkupplung (13,23) bildet und ein in gekuppeltem Zustand offenes, sonst geschlossenes Auslaßventil aufweist, und mit Füßen (4,34), die beim Abstellen des Entnahmebehälters (1,21) das Auslaßschnellkupplungsteil (13,23) vor Verschmutzung schützen, ausgerüstet ist, und von denen der andere als Sammelbehälter (2) dient, der eine Einfüllöffnung (großes Spundloch 16) aufweist, die mit dem zweiten (Einlaß-)teil der Schnellkupplung (14,36) verbunden ist und ein im gekuppelten Zustand offenes, sonst geschlossenes Einlaßventil aufweist, und der mit einer Entlüftungvorrichtung (18) ausgerüstet ist.

2. Einrichtung nach Anspruch 1, dadurch **gekennzeichnet**, daß die Entlüftungsvorrichtung (18) separat von der Einfüllöffnung angeordnet ist.

3. Einrichtung nach einem der vorhergehenden Ansprüche, dadurch **gekennzeichnet**, daß der Sammelbehälter (2) ein Faß mit zwei Spundlöchern (16,17) ist.

4. Einrichtung nach einem der vorhergehenden Ansprüche, dadurch **gekennzeichnet**, daß im größeren Spundloch (16) das Einlaßschnellkupplungsteil (14,36) und im kleineren Spundloch (17) die automatisch funktionierende Entlüftungsvorrichtung (18) angeordnet ist.

5. Einrichtung nach einem der vorhergehenden Ansprüche, dadurch **gekennzeichnet**, daß das Einlaßschnellkupplungsteil (14,36) und/oder die Entlüfungsvorrichtung (18) lösbar in den Spundlöchern (16,17) befestigt ist.

6. Einrichtung nach einem der vorhergehenden Ansprüche, dadurch **gekennzeichnet**, daß das Einlaßschnellkupplungsteil (14,36) und/oder die Entlüftungsvorrichtung (18) mittels Siegelkappen (19,20) nach ihrer Befestigung gesichert ist.

7. Einrichtung nach einem der vorhergehenden Ansprüche, dadurch **gekennzeichnet**, daß die Füße (4,34) an einem den Entnahmebehälter (1,21) unten und zumindest teilweise seitlich umfassenden Ständer (3) angebracht sind.

8. Einrichtung nach einem der vorhergehenden Ansprüche, dadurch **gekennzeichnet**, daß der Entnahmebehälter (1,21), wenn er an den Sammelbehälter (2) gekuppelt ist, auf den Füßen (4,34) steht.

9. Einrichtung nach einem der vorhergehenden Ansprüche, dadurch **gekennzeichnet**, daß der Ständer (3) ein Korb (5) ist.

10. Einrichtung nach einem der vorhergehenden Ansprüche, dadurch **gekennzeichnet**, daß am Ständer (3) bzw. Korb (5) eine Vorrichtung (6) zum Einhängen des Entnahmebehälters (1)
- beispielsweise an einer Wand - angebracht ist.

11. Einrichtung nach einem der vorhergehenden Ansprüche, dadurch **gekennzeichnet**, daß am Ständer (3) bzw. Korb (5) eine Halterung (9) für das freie Schlauchende (10) angebracht ist.

12. Einrichtung nach einem der vorhergehenden Ansprüche, dadurch **gekennzeichnet**, daß der Ständer (3) bzw. Korb (5) aus Metall besteht.

13. Einrichtung nach einem oder mehreren der Ansprüche 1 bis 8, dadurch **gekennzeichnet**, daß der Ständer (3) eine aus Kunststoff gefertigte Schale (35) mit angegossenen Füßen (34) ist.

14. Einrichtung nach Anspruch 13, dadurch **gekennzeichnet**, daß die Schale (35) auf den Boden des Entnahmebehälters (21) von unten aufgesetzt und dort befestigt ist.

15. Einrichtung nach Anspruch 13 oder 14, dadurch **gekennzeichnet**, daß die Schale (35) mittels des Auslaßschnellkupplungsteils (23) am Boden des Entnahmebehälters (21) befestigt ist.

16. Einrichtung nach einem der vorhergehenden Ansprüche, dadurch **gekennzeichnet**, daß oben am Entnahmebehälter (1) ein Griff (10) angebracht ist.

17. Einrichtung nach einem der Ansprüche 1 bis 15, dadurch **gekennzeichnet**, daß am oberen Drittel des Entnahmebehälters (21) seitlich ein Griff (30) ausgebildet ist.

18. Einrichtung nach Anspruch 17, dadurch **gekennzeichnet**, daß am Griff (30) eine Vorrichtung (31) zum Einhängen des Entnahmebehälters (21) - beispielsweise an einer Wand oder einem Teil eines Kraftfahrzeugs - angebracht ist.

19. Einrichtung nach Anspruch 18, dadurch **gekennzeichnet**, daß die Vorrichtung (31) gleichzeitig als Halterung (32) für das im unbenutzten Zustand freie Schlauchende (33) dient.

20. Einrichtung nach einem der Ansprüche 18 oder 19, dadurch **gekennzeichnet**, daß die Vorrichtung (31) ein Drahtbügel ist.

21. Einrichtung nach einem der vorhergehenden Ansprüche, dadurch **gekennzeichnet**, daß die Behälter (1,21;2) aus halbdurchsichtigem Material hergestellt sind.

22. Einrichtung nach einem der vorhergehenden Ansprüche, dadurch **gekennzeichnet**, daß ein rohrförmiges Verbindungselement (25) vorgesehen ist, das zumindest zwei Einfüllöffnungen und eine diese untereinander und mit dem Inneren des Sammelbehälters (2) verbindende Verbindungsleitung bildet.

23. Einrichtung nach Anspruch 22, dadurch **gekennzeichnet**, daß das Verbindungselement (25) ein im wesentlichen U-förmiges Rohr ist, das im Scheitelpunkt des Krümmungsbogens mit einem sich senkrecht zur Ebene des U's erstreckenden Auslaßschnellkupplungsteil (27) mit Auslaßventil ausgerüstet ist, das an den freien Schenkeln des U's mit sich senkrecht zur Ebene des U's erstreckenden Füßen (26), die sich auf den Rand des Sammelbehälters (2) stützen, ausgerüstet ist und das mit mindestens zwei sich senkrecht zur Ebene des U's - jedoch in die andere Richtung wie die Füße (26) und das Auslaßschnellkupplungsteil (27) - erstreckenden Einlaßschnellkupplungsteilen (24) mit Einlaßventilen ausgerüstet ist.

## Claims

1. A device for collecting a liquid, comprising at least two tanks (1, 21; 2) which are couplable to each other by means of a quick-acting coupling apparatus, at least one of the tanks serving as a withdrawal tank (1, 21) which has a filling opening positioned on top and to which a hose (8, 28) is fixed, including an outlet opening positioned in the bottom of the tank and forming the outlet element of a quick-acting coupling apparatus (13, 23) and having an outlet valve that is open in the coupled condition and otherwise closed, and feet (4, 34) which, on putting the withdrawal tank (1, 21) on the ground, protect the quick-acting outlet coupling element (13, 23) against soiling, and the other one of the tanks serves as a collecting tank (2) which has a filling opening (large-size bunghole 16) coupled to the second (inlet) element of the quick-acting coupling apparatus (14, 36) and having an inlet valve that is open in the coupled condition and otherwise closed, and which is equipped with a venting apparatus (18).

2. A device as claimed in claim 1,
**characterized** in that the venting apparatus (18) is positioned so as to be separated from the filling opening.

3. A device as claimed in anyone of the preceding claims,
**characterized** in that the collecting tank (2) is a barrel with two bungholes (16, 17).

4. A device as claimed in anyone of the preceding claims,
**characterized** in that the quick-acting inlet coupling element (14, 36) is arranged in the larger-size bunghole (16), and the automatically functioning venting apparatus (18) is arranged in the smaller-size bunghole (17).

5. A device as claimed in anyone of the preceding claims,
**characterized** in that the quick-acting inlet coupling element (14, 36) and/or the venting apparatus (18) is detachably fixed in the bungholes (16, 17).

6. A device as claimed in anyone of the preceding claims,
**characterized** in that, upon their fixation, the quick-acting inlet coupling element (14, 36) and/or the venting apparatus (18) is secured by means of sealing caps (19, 20).

7. A device as claimed in anyone of the preceding claims,
**characterized** in that the feet (4, 34) are fixed to a stand (3) which surrounds the withdrawal tank (1, 21) at its bottom and at least partly laterally.

8. A device as claimed in anyone of the preceding claims,
**characterized** in that, when it is coupled to the collecting tank (2), the withdrawal tank (1, 21) rests on the feet (4, 34).

9. A device as claimed in anyone of the preceding claims,
**characterized** in that the stand (3) is a basket (5).

10. A device as claimed in anyone of the preceding claims,
**characterized** in that an apparatus (6) is secured to the stand (3) or to the basket (5) for the suspension of the withdrawal tank (1), for example at a wall.

11. A device as claimed in anyone of the preceding claims,
**characterized** in that a holder (9) for the free hose end (10) is secured to the stand (3) or to the basket (5).

12. A device as claimed in anyone of the preceding claims,
**characterized** in that the stand (3) or the basket (5) is made of metal.

13. A device as claimed in anyone or in a plurality of claims 1 to 8,
**characterized** in that the stand (3) is a cup (35) fabricated of plastic material with the feet (34) being integrally cast to it.

14. A device as claimed in claim 13,
**characterized** in that the cup (35) is put on from below and fixed to the bottom of the withdrawal tank (21).

15. A device as claimed in claim 13 or in claim 14,
**characterized** in that the cup (35) is fixed to the bottom of the withdrawal tank (21) by means of the quick-acting outlet coupling element (23).

16. A device as claimed in anyone of the preceding claims,
**characterized** in that a handle (10) is positioned on top of the withdrawal tank (1).

17. A device as claimed in anyone of claims 1 to 15,
**characterized** in that a handle (30) is laterally provided at the upper third of the withdrawal tank (21).

18. A device as claimed in claim 17,
**characterized** in that an apparatus (31) is secured to the handle (30) for the suspension of the withdrawal tank (21), for example, at a wall or at a part of an automotive vehicle.

19. A device as claimed in claim 18,
**characterized** in that the apparatus (31) serves simultaneously as a holder (32) for the end of the hose which is a free hose end (33) in the unutilized condition.

20. A device as claimed in anyone of claims 18 or 19,
**characterized** in that the apparatus (31) is a wire bow.

21. A device as claimed in anyone of the preceding claims,
**characterized** in that the tanks (1, 21; 2) are manufactured of semitransparent material.

22. A device as claimed in anyone of the preceding claims,
**characterized** in that a tube-shaped connecting element (25) is provided which has at least two filling openings and one connecting line interconnecting the filling openings and connecting them to the interior of the collecting tank (2).

23. A device as claimed in claim 22,
**characterized** in that the connecting element (25) is a basically U-shaped pipe which, in the summit of the curvature, has a quick-acting outlet coupling element (27) extending at right angles to the plane of the "U" and comprising an outlet valve, which connecting element (25) is furnished, at the free legs of the "U", with feet (26) extending at right angles to the plane of the "U" and taking support on the rim of the collecting tank (2), and which is provided with at least two quick-acting inlet coupling elements (24) with inlet valves extending at right angles to the plane of the "U" but into the opposite direction relative to the feet (26) and to the quick-acting outlet coupling element (27).

## Revendications

1. Dispositif pour collecter un liquide, constitué par au moins deux récipients (1,21;2), qui peuvent être reliés entre eux par un accouplement rapide et dont l'un au moins est utilisé en tant que récipient de prélèvement (1,21), qui comporte une ouverture de remplissage, qui est disposée à sa partie supérieure et à laquelle est fixé un tuyau (8,28), ainsi qu'une ouverture de sortie disposée dans son fond et qui forme la partie de sortie de l'accouplement rapide (13,23) et possède une soupape de sortie ouverte à l'état accouplé, alors qu'autrement elle est fermée, et des pieds (4,34), qui, lors du retrait du récipient de prélèvement (1,21), protègent la pièce d'accouplement rapide de sortie (13,23) vis-à-vis d'un salissement, et l'autre récipient étant utilisé en tant que récipient de collecte (2), qui possède une ouverture de remplissage (grand trou de bonde 16), qui est reliée à la seconde partie (d'entrée) de l'accouplement rapide (14,36) et possède une soupape d'entrée, qui est ouverte à l'état accouplé, alors que sinon elle est fermée, et qui est équipée d'un dispositif de vidage (18).

2. Dispositif selon la revendication 1, caractérisé en ce que le dispositif de vidage (18) est monté séparément de l'ouverture de remplissage.

3. Dispositif selon l'une des revendications précédentes, caractérisé on ce que le récipient de collecte (2) est un fût comportant deux trous de bonde (16,17).

4. Dispositif selon l'une des revendications précédentes, caractérisé en ce que la partie d'entrée (14,36) de l'accouplement rapide est disposée dans le trou de bonde (16) le plus grand et que le dispositif de vidage (18), qui fonctionne automatiquement, est disposé dans le trou de bande (17) le plus petit.

5. Dispositif selon l'une des revendications précédentes, caractérisé en ce que la partie d'entrée (14,36) de l'accouplement rapide et/ou le dispositif de désaération (18) sont fixés de façon amovible dans les trous de bonde (16,17).

6. Dispositif selon l'une des revendications précédentes, caractérisé en ce que la partie d'entrée (14,36) de l'accouplement rapide et/ou le dispositif de désaération (18) sont bloqués au moyen de capuchons de protection (19,20) après leur fixation.

7. Dispositif selon l'une des revendications précédentes, caractérisé en ce que les pieds (4,34) sont disposés sur un support (3) qui entoure le récipient de prélèvement (1,21) à sa partie inférieure et au moins en partie latéralement.

8. Dispositif selon l'une des revendications précédentes, caractérisé en ce que, lorsqu'il est accouplé au récipient de collecte (2), le récipient de prélèvement (1,21) est disposé sur les pieds (4,34).

9. Dispositif selon l'une des revendications précédentes, caractérisé en ce que le support (3) est un panier (5).

10. Dispositif selon l'une des revendications précédentes, caractérisé en ce que sur le support (3) ou le panier (5), un dispositif (6) est installé pour l'accrochage du récipient de prélèvement (1) - par exemple sur un mur.

11. Dispositif selon l'une des revendications précédentes, caractérisé en ce que sur le support (3) ou sur le panier (5) est disposé un organe de retenue (9) pour l'extrémité libre (10) d'un tuyau.

12. Dispositif selon l'une des revendications précédentes, caractérisé en ce que le support (3) ou le panier (5) est réalisé en un métal.

13. Dispositif selon l'une des revendications 1 à 8, caractérisé en ce que le support (3) est une coque (35) réalisée en matière plastique, sur laquelle sont moulés des pieds (34).

14. Dispositif selon la revendication 13, caractérisé en ce que la coque (35) est mise en place à partir du bas contre le fond du récipient de prélèvement (21) et y est fixée.

15. Dispositif selon la revendication 13 ou 14, caractérisé en ce que la coque (35) est fixée au moyen de la partie (23) de l'accouplement rapide, au fond du récipient de prélèvement (21).

16. Dispositif selon l'une des revendications précédentes, caractérisé en ce qu'une poignée (10) est installée à la partie supérieure du récipient de prélèvement (1).

17. Dispositif selon l'une des revendications 1 à 15, caractérisé en ce qu'une poignée (30) est formée latéralement dans le tiers supérieur du réservoir de prélèvement (21).

18. Dispositif selon la revendication 17, caractérisé en ce que sur la poignée (30) est disposé un dispositif (31) servant à accrocher le récipient de prélèvement (21) - par exemple à un mur ou à une partie d'un véhicule automobile.

19. Dispositif selon la revendication 18, caractérisé en ce que le dispositif (31) sert simultanément d'organe de retenue (32) pour l'extrémité (33) du tuyau, qui est libre à l'état non utilisé.

20. Dispositif selon l'une des revendications 18 ou 19, caractérisé en ce que le dispositif (31) est un étrier formé d'un fil.

21. Dispositif selon l'une des revendications précédentes, caractérisé en ce que les récipients (1,21;2) sont fabriqués en un matériau semi-transparent.

22. Dispositif selon l'une des revendications précédentes, caractérisé on ce qu'il est prévu un élément de liaison de forme tubulaire (25), qui forme au moins deux ouvertures de remplissage et une canalisation de liaison reliant ces ouvertures entre elles et à l'intérieur du récipient de collecte (2).

23. Dispositif selon la revendication 22, caractérisée en ce que l'élément de liaison (25) est un tube essentiellement en forme de U, qui, au niveau du sommet de l'arc de courbure, comporte une partie de sortie (27) d'accouplement rapide, qui s'étend perpendiculairement au plan du U et possède une soupape de sortie, qui comporte, au niveau des branches libres du U, des pieds (26), qui s'étendent perpendiculairement au plan du U et prennent appui sur le bord du récipient de collecte (2), et qui comportent au moins deux parties d'entrée d'accouplement rapide (24), qui s'étendent perpendiculairement au plan du U - mais dans la direction opposée à celle des pieds (26) et de la partie de sortie (27) de l'accouplement rapide - et comportent des soupapes d'entrée.
